(19) Europäisches Patentamt
European Patent Office
Office européen des brevets

(11) **EP 4 207 018 A1**

(12) **EUROPEAN PATENT APPLICATION**
published in accordance with Art. 153(4) EPC

(43) Date of publication:
**05.07.2023 Bulletin 2023/27**

(51) International Patent Classification (IPC):
**G06Q 10/08** (2023.01)

(21) Application number: **21874251.8**

(22) Date of filing: **15.09.2021**

(86) International application number:
**PCT/CN2021/118529**

(87) International publication number:
**WO 2022/068590 (07.04.2022 Gazette 2022/14)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **30.09.2020 CN 202011062111**

(71) Applicants:
• **Beijing Wodong Tianjun Information Technology Co.,
Ltd.
100176 Beijing (CN)**
• **Beijing Jingdong Century Trading Co., Ltd.
Beijing 100176 (CN)**

(72) Inventors:
• **XIA, Ling**
**Beijing 100176 (CN)**
• **WANG, Wenming**
**Beijing 100176 (CN)**
• **LIU, Wenhe**
**Beijing 100176 (CN)**
• **LI, Linlin**
**Beijing 100176 (CN)**
• **MA, Jiaqi**
**Beijing 100176 (CN)**

(74) Representative: **Vossius & Partner
Patentanwälte Rechtsanwälte mbB
Siebertstraße 3
81675 München (DE)**

(54) **STOCKING QUANTITY DETERMINATION METHOD AND APPARATUS, AND COMPUTER STORAGE MEDIUM AND ELECTRONIC DEVICE**

(57) A stocking quantity determination method, a stocking quantity determination apparatus, a computer storage medium and an electronic device. The stocking quantity determination method comprises: triggering a pre-created stocking task at a specified time, and distributing the stocking task to a task execution object (S110); selecting a target item according to first interaction information which is input by the task execution object (S120); determining a predicted transaction amount of the target item according to second interaction information which is input by the task execution object (S130); and when the predicted transaction amount is greater than a first rated value, stocking the target item according to a planned stocking quantity (S140). A stocking quantity can be quickly and accurately determined according to a transaction target, and the rational allocation of items can be ensured, thereby optimizing the service processing performance of a system.

FIG. 1

# Description

## CROSS-REFERENCE TO RELATED APPLICATION

The present disclosure claims priority to Chinese Patent Application No. 202011062111.7, filed September 30, 2020, titled "STOCKING QUANTITY DETERMINATION METHOD AND APPARATUS, AND COMPUTER STORAGE MEDIUM AND ELECTRONIC DEVICE", the entire contents of which are incorporated herein by reference.

## TECHNICAL FIELD

The present disclosure relates to the technical field of intelligent warehousing, and in particular, to a method for determining a stocking quantity, an apparatus for determining a stocking quantity, a computer storage medium and an electronic device.

## BACKGROUND

As an informationalized, intelligentized and mechanized warehousing system developed in recent years, the intelligent warehousing is not only composed of many hardware systems, but also constructed of many software systems. It is a highly informationalized, intelligentized and high-input important subsystem of the logistics system, and has an important impact on the development of the economy.

In the related art, the stocking quantity of the items in the next time period is generally determined based on the human judgment of the purchasing and marketing personnel. This method is subject to the subjective influence of the purchasing and marketing personnel, and the accuracy of the stocking quantity cannot be guaranteed. Furthermore, due to the inaccuracy of the stocking quantity, the system is triggered to frequently allocate and optimize the quota of items between different orders and different warehouses, which affects the performance of the system in processing normal business.

In view of this, there is an urgent need in the art to develop a new method and apparatus for determining a stocking quantity.

It should be noted that the information disclosed in the above background section is only used to enhance the understanding of the background of the present disclosure.

## SUMMARY

Other features and advantages of the present disclosure will become apparent from the following detailed description, or be learned in part by practice of the present disclosure.

According to a first aspect of the present disclosure, there is provided a method for determining a stocking quantity, including: triggering a pre-created stocking task at a specified time, and distributing the stocking task to a task execution object; selecting a target item according to first interaction information input by the task execution object; determining a predicted transaction amount of the target item according to second interaction information input by the task execution object; where the second interaction information includes: a predicted transaction volume, transaction attribute data and a planned stocking amount of the target item; when the predicted transaction amount is greater than a first rated value, stocking the target item according to the planned stocking quantity.

In an exemplary embodiment of the present disclosure, after determining the predicted transaction amount of the target item, the method further includes: acquiring a month-on-month growth value and/or a year-on-year growth value of the predicted transaction amount; when the month-on-month growth value is greater than a second rated value and/or the year-on-year growth value is greater than a third rated value, stocking the target item according to the planned stocking quantity.

In an exemplary embodiment of the present disclosure, the first interaction information includes item information; and the selecting the target item according to the first interaction information input by the task execution object includes: selecting the target item according to the item information input by the task execution object.

In an exemplary embodiment of the present disclosure, the first interaction information includes an item screening condition; the selecting the target item according to the first interaction information input by the task execution object includes: displaying recommended items that satisfy the item screening condition for the task execution object according to the item screening condition input by the task execution object; in response to an item selection operation of the task execution object, selecting the target item from the recommended items.

In an exemplary embodiment of the present disclosure, after stocking the target item according to the planned stocking quantity, the method further includes: when determining that attribute information of the target item satisfies a preset rule, acquiring a historical transaction volume of each item exhibitor for the target item within a preset time period before a current time; inputting the historical transaction volumes into a pre-trained first transaction volume prediction model, and determining outputs of the first transaction volume prediction model as the predicted transaction volumes corresponding to respective item exhibitors; where the first transaction volume prediction model is obtained by training a machine learning model according to historical transaction volume samples; acquiring an accumulated value of the predicted transaction volumes corresponding to a plurality of item exhibitors; when the accumulated value is less than or equal to the planned stocking quantity, determining the predicted transaction volumes corresponding to individual item exhibitors as distribution quantities of respective item exhibitors.

In an exemplary embodiment of the present disclosure, the method further includes: when the accumulated value is greater than the planned stocking quantity, acquiring ratios of the predicted transaction volumes corresponding to individual item exhibitors to the accumulated value, respectively; determining products of the ratios and the planned stocking quantity as the distribution quantities of respective item exhibitors.

In an exemplary embodiment of the present disclosure, the method further includes: when determining that the attribute information of the target item does not satisfy the preset rule, acquiring personal purchasing power parameters, industry parameters and economic situation parameters of regions where individual item exhibitors are located; inputting the personal purchasing power parameters, the industry parameters and the economic situation parameters into a second transaction volume prediction model, and determining outputs of the second transaction volume prediction model as the predicted transaction volumes corresponding to respective item exhibitors; where the second transaction volume prediction model is obtained by training a machine learning model according to personal purchasing power parameter samples, industry parameter samples and economic situation parameter samples.

According to a second aspect of the present disclosure, there is provided an apparatus for determining a stocking quantity, including: a task distribution module, configured to trigger a pre-created stocking task at a specified time, and distribute the stocking task to a task execution object; an item selection module, configured to select a target item according to first interaction information input by the task execution object; a prediction module, configured to determine a predicted transaction amount of the target item according to second interaction information input by the task execution object; where the second interaction information includes: a predicted transaction volume, transaction attribute data and a planned stocking quantity of the target item; a stocking module, configured to stock the target item according to the planned stocking quantity when the predicted transaction amount is greater than a first rated value.

According to a third aspect of the present disclosure, there is provided a computer storage medium on which a computer program is stored, and when the computer program is executed by a processor, the method for determining a stocking quantity described in the above-mentioned first aspect is implemented.

According to a fourth aspect of the present disclosure, there is provided an electronic device, including: a processor; and a memory for storing executable instructions of the processor; where the processor is configured to execute the method for determining a stocking quantity described in the first aspect above by executing the executable instructions.

It should be understood that both the foregoing general description and the following detailed description are exemplary and explanatory only and do not limit the present disclosure.

## BRIEF DESCRIPTION OF THE DRAWINGS

The accompanying drawings, which are incorporated in and constitute a part of this specification, illustrate embodiments consistent with the present disclosure and, together with the description, serve to explain the principles of the present disclosure. Obviously, the accompanying drawings in the following description are only some embodiments of the present disclosure, and other accompanying drawings can be obtained according to these accompanying drawings for the person skilled in the art without any creative work.

FIG. 1 shows a schematic flowchart of a method for determining a stocking quantity in an exemplary embodiment of the present disclosure;
FIG. 2 shows a schematic diagram of a sub-flow of a method for determining a stocking quantity in an exemplary embodiment of the present disclosure;
FIG. 3 shows a schematic diagram of a sub-flow of a method for determining a stocking quantity in an exemplary embodiment of the present disclosure;
FIG. 4 shows a schematic overall flowchart of a method for determining a stocking quantity in an exemplary embodiment of the present disclosure;
FIG. 5 shows a schematic diagram of an interaction flow of a method for determining a stocking quantity in an exemplary embodiment of the present disclosure;
FIG. 6 shows a schematic structural diagram of an apparatus for determining a stocking quantity in an exemplary embodiment of the present disclosure;
FIG. 7 shows a schematic structural diagram of a computer storage medium in an exemplary embodiment of the present disclosure;
FIG. 8 shows a schematic structural diagram of an electronic device in an exemplary embodiment of the present disclosure.

## DETAILED DESCRIPTION

Exemplary implementation manners will now be described more fully with reference to the accompanying drawings. However, the exemplary implementation manners can be implemented in various forms and should not be construed as being limited to the examples set forth herein. Rather, these implementation manners are provided so that the present disclosure will be more thorough and complete, and will fully convey the concepts of the exemplary implementation manners to those skilled in the art. The described features, structures, or properties may be combined in any suitable manner in one or more implementation manners. In the following description, numerous specific details are provided in order to give a thorough understanding of the implementation manners of the present disclosure. However, those skilled in the art will appreciate that the technical solutions of the present disclosure may be practiced without one or more of the specific details, or other methods, components, apparatuses, steps, etc. may be adopted. In other instances, well-known technical solutions are not shown or described in detail to avoid obscuring various aspects of the present disclosure.

The terms "a", "an", "the" and "said" are used in the present specification to indicate the presence of one or more elements/components/etc.; the terms "include" and "have" are used to indicate open-ended and inclusive means, and means that additional elements/components/etc. may be present in addition to the listed elements/components/etc.; the terms "first" and "second" etc. are used only as labels, not for limiting the number of their objects.

In addition, the accompanying drawings are merely schematic illustrations of the present disclosure and are not necessarily drawn to scale. The same reference numerals in the drawings indicate the same or similar parts, and thus repeated descriptions thereof will be omitted. Some block diagrams shown in the drawings are functional entities and do not necessarily have to correspond to physically or logically independent entities.

In the related art, the purchasing and marketing personnel generally judge the stocking of key items in the next time period based on the average sales of previous years, combined with the operational feedback and acuity of the current market environment, and then distribute the stocked items to individual item exhibitors in combination with the conditions of the offline item exhibitors to achieve the purpose of distribution.

However, the stocking and distribution determined by experience and external environment cannot reasonably deduce and replay data, so that accurate prediction and adjustment cannot be performed, resulting in the system frequently allocating and optimizing the quota of items between different orders and different warehouses, which affects the performance of the system to process normal services.

In the embodiments of the present disclosure, a method for determining a stocking quantity is first provided, which at least to a certain extent overcomes the defects in the related art that the stocking quantity is inaccurate and the performance of the system is affected.

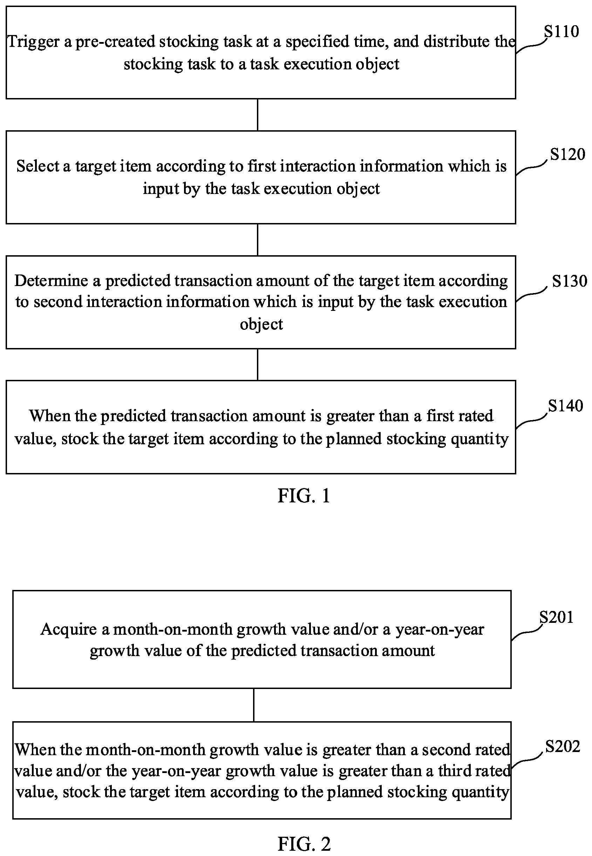

FIG. 1 shows a schematic flowchart of a method for determining a stocking quantity in an exemplary embodiment of the present disclosure. The execution body of the method for determining a stocking quantity may be a server or a system that manages warehouse goods.

Referring to FIG. 1, a method for determining a stocking quantity according to an embodiment of the present disclosure includes the following steps.

In step S 110, a pre-created stocking task is triggered at a specified time, and the stocking task is distributed to a task execution object.

In step S120, a target item is selected according to first interaction information input by the task execution object.

In step S130, a predicted transaction amount of the target item is determined according to second interaction information input by the task execution object; where the second interaction information includes: a predicted transaction volume, transaction attribute data and a planned stocking quantity of the target item.

In step S140, when the predicted transaction amount is greater than a first rated value, the target item is stocked according to the planned stocking quantity.

In the technical solution provided by the embodiment shown in FIG. 1, the pre-created stocking task is triggered at a specified time, and the stocking task is distributed to the task execution object, which can avoid problems such as out-of-stock caused by untimely stocking, and ensure timely execution of the stocking task. Further, the target item is selected according to the first interaction information input by the task execution object, and the predicted transaction amount of the target item is determined according to the second interaction information input by the task execution object, which can reasonably predict the transaction situation of the item in advance and avoid blind stocking. On the other hand, when the predicted transaction amount is greater than the first rated value, stocking the target item according to the planned stocking quantity can not only link the stocking quantity with the transaction target, but also solve the problem of inability to quickly and accurately determine the stocking quantity according to the transaction target due to stocking by relying on manual experience in related art. It realizes reasonable stocking, avoids the system frequently allocates the quota of items between different orders and different warehouses due to inaccurate stocking quantity, optimizes the performance of the system for normal business processing, avoids unnecessary data reading and writing process, and improves the business processing speed.

The specific implementation process of each step in FIG. 1 is described in detail below.

It should be noted that the method for determining a stocking quantity in the present disclosure may be applied to the exclusive warehouse of key items, and the key items may include: newly launched items, main items, periodic necessities, disposable items, discounted items, etc. Specifically, the key items may be items with high transaction amount in previous years, fresh items with short storage time, etc., which may be set by themselves according to the actual situation, and belong to the protection scope of the present disclosure.

Exemplarily, the warehouse manager may create a stocking task in advance. For example, the warehouse manager may first log into the system (warehousing management system, hereinafter referred to as the system), and then create a corresponding stocking task. Specifically, a task name, a task execution object (that is, the task leader, exemplarily, that may be the name, job number, etc. of a specific task execution object), a task execution period (every month/every quarter), a task effective time (for example: 0:00 on August 1, 2020), a type of item to be purchased (which may include newly launched items, periodic necessities, disposable items, value-added combination items, discounted items, etc.) may be set. In turn, the warehouse manager may save the task.

In step S 110, a pre-created stocking task is triggered at a specified time, and the stocking task is distributed to the task execution object.

When the above-mentioned task effective time (or the specified task execution time, for example: 0:00 on September 1, 2020) is reached, the system may automatically distribute the above-mentioned stocking task to the corresponding task execution object. For example, the stocking task may be automatically distributed to the to-do information of the task execution object, and a prompt message is sent to the task execution object to prevent the task execution object from forgetting the task.

In step S120, the target item is selected according to the first interaction information input by the task execution object.

After receiving the stocking task, the task execution object may log into the system and select the target item. Specifically, the manner for selecting the target item may include one of the following:

① Manual input. Exemplarily, the task execution object may input the first interaction information. Exemplarily, the first interaction information may be SKU_ID (Stock Keeping Unit, abbreviated as: SKU, one SKU corresponds to one specified item; identification, abbreviated as: ID), SKU name, item exhibitor information, supplier information and other item information. Further, after receiving the above item information, the system may automatically select the target item that needs to be stocked. Exemplarily, the first interaction information input by the task execution object may also be a screening condition of the item, and further, the system may search for recommended items that satisfy the above screening condition from individual item exhibitors or supplier platforms, and display the above recommended items. Further, the task execution object may perform an item selection operation on the current display page. For example, one item may be selected by clicking or double-clicking with the mouse, and the item may be determined as the target item.

② Select through a business analysis interface of the item exhibitor. Exemplarily, the system may call the comprehensive business analysis interface of the specified item of the specified item exhibitor within the specified reference time range, and acquire data of the sales volumes of the specified item in the past 7 days and in the past 28 days, or it may also acquire its remaining inventory. Furthermore, when the sales volume of the specified item is high (greater than a sales threshold), or the remaining inventory of the specified item is less than an inventory threshold, the specified item may be selected as the target item that needs to be stocked.

③ Scenario recommendation. Exemplarily, when the user clicks the relevant "scenario recommendation" button, the system may match the target recommendation scenario based on the current time, and display the recommended item corresponding to the target recommendation scenario based on a preset corresponding relationship between each recommended scenario and the recommended item. For example, if the current time is one week before the Dragon Boat Festival, "Zongzi" may be recommended; if the current time is one week before the Mid-Autumn Festival, "moon cakes" may be recommended; if the current time is two weeks before the Spring Festival, "wine" may be recommended. Furthermore, the task execution object may perform an item selection operation on the current display page, for example, may select one item by clicking or double-clicking with the mouse, and determine the item as the target item.

④ Periodic necessities recommendation. When the user clicks the relevant "periodic necessities recommendation" button, the system may obtain the current time and recommend the corresponding item for the task execution object according to the season to which the current time belongs. For example, when it is acquired that the current time belongs to summer, it may be recommended to display "fan, air conditioner"; when it is acquired that the current time belongs to winter, it may be recommended to display "heater, oil heater". Furthermore, the task execution object may perform an item selection operation on the current display page, for example, may select one item by clicking or double-clicking with the mouse, and determine the item as the target item.

⑤ Discounted item recommendation. When the user clicks the relevant "discount item recommendation" button, the system may acquire the current time, and match the pre-made promotion plan according to the current time to recommend and display the corresponding item. For example, if the current time is August 1, 2020, and in the relevant pre-made promotion plan, the items that need to be promoted at the current time include: A, B, and C, then the items A, B, and C may be recommended. Furthermore, the task execution object may perform an item selection operation on the current display page, for example, may select one item by clicking or double-clicking with the mouse, and determine the item as the target item.

In step S130, the predicted transaction amount of the target item is determined according to the second interaction information input by the task execution object; where the second interaction information includes: a predicted transaction volume, transaction attribute data and a planned stocking quantity of the target item.

After selecting the target item, the system may automatically capture the purchase data (for example: purchase price) and the minimum transaction attribute data (for example: the minimum price preset by the system); the task execution object may input the second interaction information, specifically, the second interaction information may include: the predicted transaction volume, transaction attribute data (for example: sales price) and the planned stocking quantity of the target item, so that the product of the transaction attribute data and the predicted transaction volume may be determined as the predicted transaction amount of the target item (i.e., predicted transaction amount=predicted transaction volume*transaction attribute data).

Exemplarily, the second interaction information input by the task execution object may also include: cost data (cost price), so that the system may determine the predicted gross margin and the estimated gross profit of the target item according to the above data, specifically, the predicted gross margin=(transaction attribute data-cost data)*predicted transaction volume, predicted gross profit =(transaction attribute data-cost data)/transaction attribute data.

It should be noted that there may be differences in the purchase data based on the different purchase regions of the item. Therefore, when there are differences in the purchase data, the relevant page may display a blank value. If the purchase data are the same, specific numerical values may be displayed. Exemplarily, the task execution object may also set the number of related online display locations, the number of offline display locations, and the like.

In step S 140, when the predicted transaction amount is greater than the first rated value, the target item is stocked according to the planned stocking quantity.

After the predicted transaction amount is calculated, it may be determined whether the predicted transaction amount is greater than the first rated value. If it is greater than the first rated value, the data may be submitted and a review task may be added to the to-do information of the corresponding reviewer to remind the reviewer to review. If the predicted transaction amount is less than the above-mentioned first rated value, the task execution object may adjust the relevant data, and then submit the data until the predicted transaction amount is greater than the first rated value. Therefore, it is possible to set different stocking quantities according to different rated values, which solves the technical problem that the stocking quantity of items cannot be linked with the transaction amount caused by relying on manual experience for stocking in related art, realizes reasonable stocking, avoids that the system frequently allocates the quota of items between different orders and different warehouses due to inaccurate stocking quantities, optimizes the performance of the system to handle normal business, avoids unnecessary data reading and writing processes, and improves business processing speed.

Therefore, after the reviewer approves, the system may send a prompt message to the task execution object, and further, the task execution object may stock up for the target item according to the above-mentioned planned stocking quantity.

Exemplarily, with reference to FIG. 2, which shows a schematic diagram of a sub-flow of a method for determining a stocking quantity in an exemplary embodiment of the present disclosure, a schematic diagram of a sub-flow of determining whether to stock the target item according to the planned stocking quantity based on the month-on-month growth value and/or year-on-year growth value of the predicted transaction amount is specifically illustrated, which includes steps S201 to S202, and the specific implementation manners are explained below with reference to FIG. 2.

In step S201, a month-on-month growth value and/or a year-on-year growth value of the predicted transaction amount is acquired.

Exemplarily, taking the current time as August 2020 as an example, the month-on-month growth value and/or year-on-year growth value of the target warehouse (that is, the warehouse where the task execution object is stocking, for example: Xi'an warehouse, Chengdu warehouse, etc.) in 2020 may be acquired according to the above predicted transaction amount. Exemplarily, the month-on-month growth value may be the growth value of the target warehouse's predicted transaction amount in August 2020 compared with the actual transaction amount in July 2020, and the year-on-year growth value may be the growth value of the target warehouse's predicted transaction amount in August 2020 compared with the actual transaction amount in August 2019.

It should be noted that the above-mentioned month-on-month growth value may include a month-on-month growth volume and/or a month-on-month growth rate, and the year-on-year growth value may include a year-on-year growth volume and/or a year-on-year growth rate, which may be set according to the actual situation and belong to the protection scope of the present disclosure.

The specific calculation formula may be: month-on-month growth volume = predicted transaction amount in August 2020 - actual transaction amount in July 2020, month-on-month growth rate = (predicted transaction amount in August 2020 - actual transaction amount in July 2020) / actual transaction amount in July 2020 $\times$ 100%, year-on-year growth volume = predicted transaction amount in August 2020 - actual transaction amount in August 2019, year-on-year growth rate = (predicted transaction amount in August 2020 - actual transaction amount in August 2019)/ actual transaction amount in August 2019 $\times$ 100%.

In step S202, when the month-on-month growth value is greater than a second rated value and/or the year-on-year growth value is greater than a third rated value, the target item is stocked according to the planned stocking quantity.

Furthermore, when the month-on-month growth value is greater than the second rated value and/or the year-on-year growth value is greater than the third rated value, the target item may be stocked according to the planned stocking quantity.

Exemplarily, if the target warehouse is an old warehouse with transaction record data for at least two years, the second rated value may be set as: the month-on-month growth volume of the actual transaction amount of the target warehouse in July 2020 compared with the actual transaction amount in June 2020; the third rated value may be set as: the year-on-year growth volume of the actual transaction amount of the target warehouse in August 2019 compared with the actual transaction amount in August 2018.

If the target warehouse is a newly built warehouse with less than one year's transaction record data, assuming that the target warehouse is Xi'an warehouse, and the city level of Xi'an is the second level, the relevant data of the Chengdu warehouse (the city level of Chengdu is the same as that of Xi'an) may be used as reference data, therefore, the second rated value may be set as: the month-on-month growth volume of the actual transaction amount of the Chengdu warehouse in July 2020 compared with the actual transaction amount in June 2020; and the third rated value may be set as: the year-on-year growth volume of the actual transaction amount of the Chengdu warehouse in August 2019 compared with the actual transaction amount in August 2018.

If there is no corresponding warehouse with the same city level as the Xi'an warehouse and with transaction record data for at least two years, the relevant transaction attribute data of other items similar to the target item in Xi'an area may be crawled through the web crawler program, and the above-mentioned second rated value and third rated value are determined by manual comprehensive analysis, which may be set according to the actual situation, and belong to the protection scope of the present disclosure.

Thus, when the month-on-month growth value is greater than the second rated value and/or the year-on-year growth value is greater than the third rated value, the data may be submitted, and further, the review task may be added to the to-do information of the corresponding reviewer to remind the reviewer to carry out review. After approval by the reviewer, a prompt message may be sent to the task execution object, and further, the task execution object may stock up for the target item according to the above-mentioned planned stocking quantity.

Exemplarily, it may also be set that when the predicted transaction amount is greater than the first rated value, and the month-on-month growth value of the predicted transaction amount is greater than the second rated value and/or the year-on-year growth value is greater than a third rated value, the target item is stocked according to the planned stocking quantity. Exemplarily, after the review is passed, it may be determined that the number of the target item to be purchased is 100 pieces.

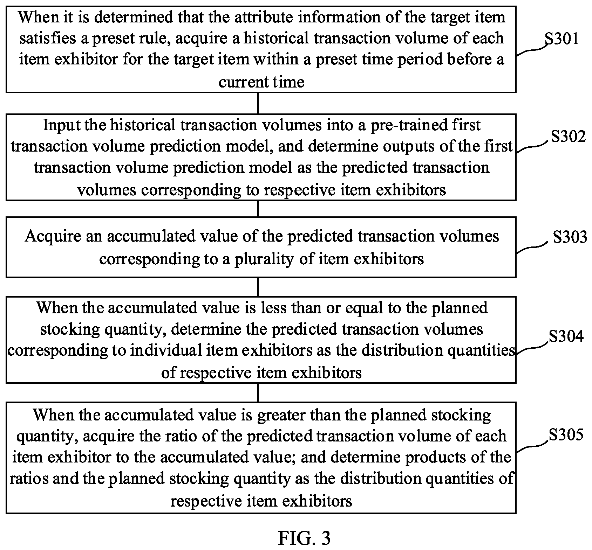

After it is determined to stock the target item according to the planned stocking quantity, if it is determined that the attribute information of the target item satisfies a preset rule (for example, the target item is not a newly launched item), then reference may be made to FIG. 3, which shows a schematic diagram of a sub-flow of a method for stocking an item in an exemplary embodiment of the present disclosure. FIG. 3 specifically shows the schematic diagram of a sub-flow of determining the distribution quantity of each item exhibitor, including steps S301-S305, and the specific implementation manners are explained below with reference to FIG. 3.

In step S301, when it is determined that the attribute information of the target item satisfies the preset rule, a historical transaction volume of each item exhibitor for the target item within a preset time period before a current time is acquired.

Exemplarily, when there are two item exhibitors (item exhibitor I and item exhibitor II), and the attribute information of the target item satisfies the preset rule, it is possible to acquire the historical transaction volume (for example: 20) of the target item sold by item exhibitor I within the past 7 days, and the historical transaction volume (for example: 40) of the target item sold by the item exhibitor II in the past 7 days.

In step S302, the historical transaction volumes are input into a pre-trained first transaction volume prediction model, and outputs of the first transaction volume prediction model are determined as the predicted transaction volumes corresponding to respective item exhibitors.

The historical transaction volume of the item exhibitor I may be input into the pre-trained first transaction volume prediction model, and according to the output of the model, the predicted transaction volume (for example: 30) of the item exhibitor I in the next 7 days may be obtained. And, the historical transaction volume of the item exhibitor II is input into the pre-trained first transaction volume prediction model, and the predicted transaction volume (for example: 50) of the item exhibitor II in the next 7 days is obtained according to the output of the model. It should be noted that, the training process of the above-mentioned first transaction volume prediction model may be: acquiring historical transaction volume samples, inputting the above-mentioned historical transaction volume samples into a machine learning model, and adjusting parameters for many times to train the above-mentioned machine learning model, so that the loss function of the above-mentioned machine learning model tends to converge, so as to obtain the above-mentioned first transaction volume prediction model.

If the attribute information of the target item satisfies the preset rule (for example: the target item is a newly launched item), a personal purchasing power parameter (the ability of the target object to purchase goods and services after obtaining income) and an industry parameter (for example: the transaction attribute data of other item similar to the target item sold by other item exhibitor) and an economic situation parameter (for example: whether the gross national product is increasing or declining) in the regions where individual item exhibitors are located may be acquired, the personal purchasing power parameters, industry parameters and economic situation parameters are entered into a second transaction volume prediction model, and outputs of the transaction volume prediction model are determined as the predicted transaction volumes corresponding to respective item exhibitors, so that the data reliability of the obtained predicted transaction volumes can be improved, thereby improving the rationality of the subsequent distribution quantity.

It should be noted that, the training process of the second transaction volume prediction model may be as follows: acquiring personal purchasing power parameter samples, industry parameter samples, and economic situation parameter samples, inputting the personal purchasing power parameter samples, industry parameter samples, and economic situation parameter samples into the machine learning model, and adjusting the parameters multiple times to train the machine learning model, so that the loss function of the machine learning model tends to converge, so as to obtain the second transaction volume prediction model.

In step S303, an accumulated value of the predicted transaction volumes corresponding to a plurality of item exhibitors is acquired.

Furthermore, the accumulated value of the predicted transaction volumes corresponding to the above-mentioned plurality of item exhibitors may be acquired, that is, 30+50=80.

In step S304, when the accumulated value is less than or equal to the planned stocking quantity, the predicted transaction volumes corresponding to individual item exhibitors are determined as the distribution quantities of respective item exhibitors.

Further, when the above-mentioned accumulated value is less than or equal to the above-mentioned planned stocking quantity, the predicted transaction volumes of individual item exhibitors may be determined as the distribution quantities of respective item exhibitors. 80 is less than 100, therefore, it may be determined that the distribution quantity of the item exhibitor I is 30, and the distribution quantity of the item exhibitor II is 50.

In step S305, when the accumulated value is greater than the planned stocking quantity, the ratio of the predicted transaction volume of each item exhibitor to the accumulated value is acquired; and products of the ratios and the planned stocking quantity are determined as the distribution quantities of respective item exhibitors.

Referring to the relevant explanation of the above step S302, if the predicted transaction volume of the item exhibitor I is 40, and the predicted transaction volume of the item exhibitor II is 80, it may be determined that the accumulated value is 120, which is greater than 100. Therefore, the ratio of the predicted transaction volume of the item exhibitor 1 to the above-mentioned accumulated value may be acquired, and the product of the ratio and the planned stocking quantity may be determined as the distribution quantity of the item exhibitor I. Thus, the distribution quantity of the item exhibitor

$$I = \frac{40}{40+80} * 100 = 33$$

. It is also possible to acquire the ratio of the predicted transaction volume of the item exhibitor II to the above-mentioned accumulated value, and the product of the ratio and the planned stocking quantity is determined as the distribution quantity of the item exhibitor II. Thus, the distribution quantity of the item exhibitor

$$II = \frac{80}{40+80} * 100 = 67$$

.

It should be noted that when there is a situation that equal division cannot be performed, the rounding method may be used to process the numerical value, or the numerical value may also be processed by rounding up or rounding down, which can be set according to the actual situation, and belongs to the protection scope of the present disclosure.

It should be noted that, after the above step S301, the distribution quantity of each item exhibitor may also be directly determined according to the historical transaction volume of each item exhibitor. That is, the accumulated value of multiple historical transaction volumes corresponding to multiple item exhibitors is acquired; when the accumulated value is less than or equal to the planned stocking quantity, the historical transaction volumes of individual item exhibitors are determined as the distribution quantities of respective item exhibitors. When the accumulated value is greater than the planned stocking quantity, the ratio of the historical transaction volume of each item exhibitor to the accumulated value is acquired respectively; and the product of the ratio and the planned stocking quantity is determined as the distribution quantity of each item exhibitor.

Furthermore, after determining the distribution quantity of each item exhibitor, the task execution object may directly remark the address of each item exhibitor and the corresponding item quantity when purchasing and placing an order. Exemplarily, (the address of the exhibitor I + 33 pieces; the address of the item exhibitor II + 67 pieces) are remarked, thus, it can avoid the problem of secondary distribution and secondary delivering after the package arrives at the warehouse, and improve the stocking efficiency of the items.

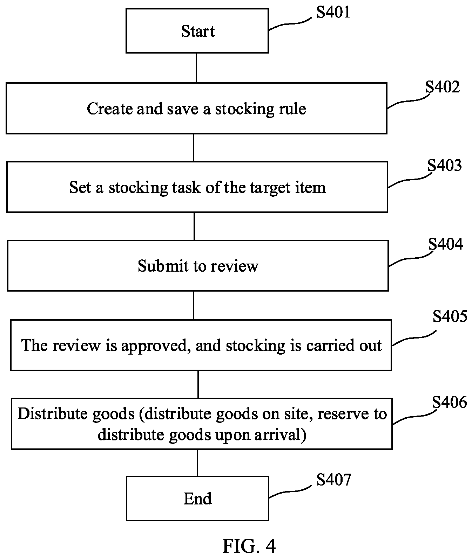

Exemplarily, reference may be made to FIG. 4, which shows an overall flow chart of a method for stocking an item in an exemplary embodiment of the present disclosure, the method includes steps S401-S407. The specific implementation manners will be explained below with reference to FIG. 4.

In step S401, the process starts.

In step S402, the warehouse manager creates and saves a stocking rule (including adding a target item name, a task execution object, selecting a task execution cycle, a task effective time, an item type).

In step S403, the task execution object formulates a stocking task (including selecting a target item, selecting an item type, setting transaction attribute data and cost data, obtaining a predicted transaction volume and a predicted transaction amount, and comparing a month-on-month growth value and/or a year-on-year growth value of the predicted transaction amount with data in previous years).

In step S404, the stocking task is submitted for review.

In step S405, the review is approved, and stocking is carried out according to the planned stocking quantity.

In step S406, the goods are distributed according to the predicted transaction volume of each item exhibitor, and it is possible to distribute the goods on site after the arrival of the goods, or it is possible to reserve the distribution quantity of each item exhibitor, so that the supplier can directly deliver the goods according to the distribution quantity.

In step S407, the process ends.

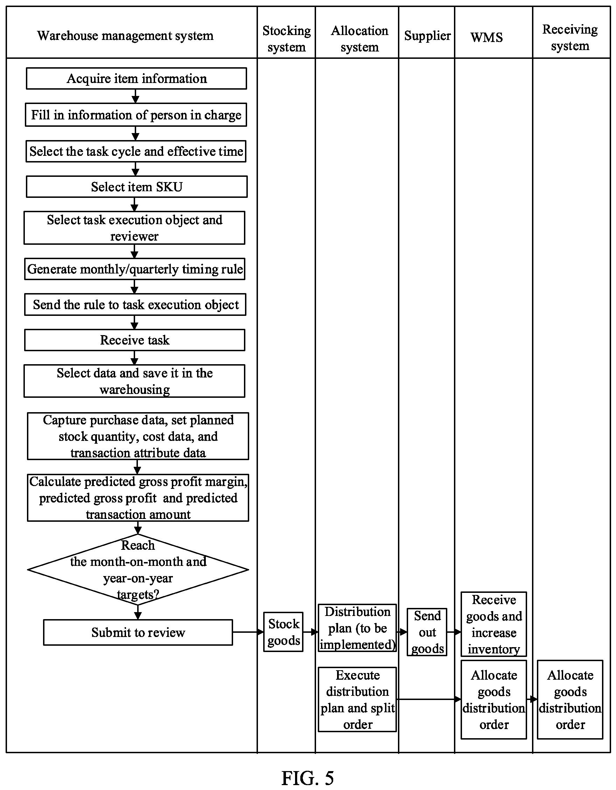

Exemplarily, reference may be made to FIG. 5, which shows an overall interactive flowchart of a method for stocking an item in an exemplary embodiment of the present disclosure, and the specific implementation manner is explained below with reference to FIG. 5.

The warehouse manager logs into the warehouse management system to acquire item information; fills in the information of the person in charge (that is, the information of the above-mentioned warehouse manager); selects the task execution cycle and task effective time; selects the item SKU; selects the task execution object and reviewer; and then, generates a monthly/quarterly regular stocking rule.

The task system regularly distributes the task triggering rule, and sends the stocking task to the relevant task execution object.

The task execution object logs into the warehouse management system and receives the task, selects the specified target item, or determines the specified category of the specified item exhibitor as the target item, and saves it for storage.

The warehouse management system acquires the purchase data, transaction attribute data, planned stocking quantity, cost price of the target item, acquires the predicted transaction volume input by the task execution object, and calculates the predicted gross margin and predicted gross profit, and determines whether the predicted transaction amount reaches a target value (first rated value or second rated value); if the target value is reached, the data will be submitted for review; if the target value is not reached, the relevant data may be modified until the target value is reached.

The reviewer logs into the warehouse management system for review. After the review is passed, the task execution object may carry out a stocking operation and send the relevant purchase order to the supplier, so that the supplier can send out the goods according to the purchase order, and after the supplier delivers the goods, after the supplier makes an appointment for delivery, Warehouse Management System (abbreviated as: WMS) increases the inventory of items, and the warehouse management system may update the status of the purchase order to: Completed, and send a prompt message to a goods allocation system.

Further, the allocation system may execute the distribution plan, and split the order according to the item exhibitor to obtain the distribution list; further, after the goods arrive at the WMS, the WMS receives the goods and updates (increases) the inventory, and further, the WMS may distribute the goods according to the distribution list. The receiving system of the item exhibitor may allocate the distribution list and receive the item.

Based on the above technical solutions, on the one hand, the present disclosure can avoid problems such as out-of-stocks caused by untimely stocking, ensure timely execution of stocking tasks, and reasonably predict the transaction status of items in advance to avoid the problem of blind stocking. Further, it can also solve the technical problem of inaccurate stocking amount caused by relying on manual experience for stocking in related art, realize reasonable stocking, and avoid the system frequently allocating the quota of items between different orders and different warehouses due to inaccurate stocking amount, optimize the performance of the system to process normal business, avoid unnecessary data reading and writing processes, and improve business processing speed. On the other hand, it can also solve the problem of unreasonable distribution quantity caused by relying on manual experience to distribute goods in related art, ensure the reasonable distribution of items, and avoid the system frequently deploying the quota of items between different orders and different warehouses due to inaccurate distribution of goods, optimize the performance of the system to handle normal business, avoid unnecessary data reading and writing processes, and improve business processing speed.

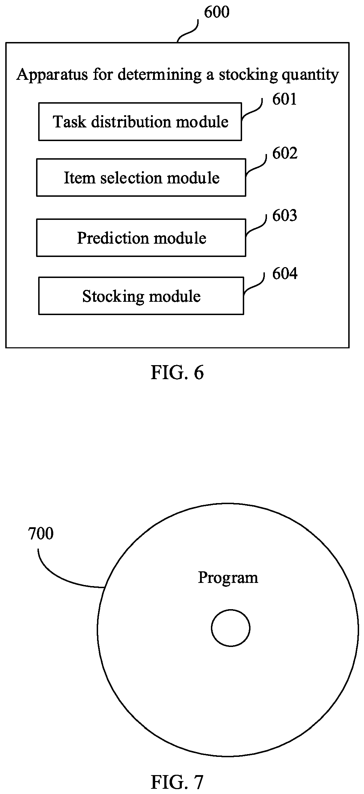

The present disclosure also provides an apparatus for determining a stocking quantity. FIG. 6 shows a schematic structural diagram of an apparatus for determining a stocking quantity in an exemplary embodiment of the present disclosure. As shown in FIG. 6, the apparatus for determining a stocking quantity 600 may include a task distribution module 601, an item selection module 602, a prediction module 603 and a stocking module 604.

The task distribution module 601 is configured to trigger a pre-created stocking task at a specified time, and distribute the stocking task to a task execution object.

The item selection module 602 is configured to select a target item according to first interaction information input by the task execution object.

In an exemplary embodiment of the present disclosure, the first interaction information includes item information; the item determination module is further configured to select a target item according to the item information input by the task execution object.

In an exemplary embodiment of the present disclosure, the first interaction information includes an item screening condition; the item determination module is further configured to display recommended items that satisfy the item screening condition for the task execution object according to the item screening condition input by the task execution object; in response to an item selection operation of the task execution object, select the target item from the recommended items.

The prediction module 603 is configured to determine the predicted transaction amount of the target item according to second interaction information input by the task execution object; the second interaction information including: a predicted transaction volume, transaction attribute data and a planned stocking quantity of the target item.

In an exemplary embodiment of the present disclosure, the prediction module is further configured to acquire a month-on-month growth value and/or a year-on-year growth value of the predicted transaction amount; when the month-on-month growth value is greater than a second rated value and/or the year-on-year growth value is greater than a third rated value, stock the target item according to the planned stocking quantity.

The stocking module 604 is configured to stock up the target item according to the planned stocking quantity when the predicted transaction amount is greater than the first rated value.

In an exemplary embodiment of the present disclosure, after stocking the target item according to the planned stocking quantity, the stocking module is further configured to acquire a historical transaction volume of each item exhibitor for the target item within a preset time period before a current time when it is determined that attribute information of the target item satisfies a preset rule; input the historical transaction volumes into a pre-trained first transaction volume prediction model, and determine outputs of the first transaction volume prediction model as the predicted transaction volumes corresponding to respective item exhibitors; where the first transaction volume prediction model is obtained by training a machine learning model according to historical transaction volume samples; acquire an accumulated value of a plurality of predicted transaction volumes; when the accumulated value is less than or equal to the planned stocking quantity, determine the predicted transaction volumes corresponding to individual item exhibitors as distribution quantities of respective item exhibitors.

In an exemplary embodiment of the present disclosure, the stocking module is further configured to acquire ratios of the predicted transaction volumes corresponding to individual item exhibitors to the accumulated value when the accumulated value is greater than the planned stocking quantity; determine products of the ratios and the planned stocking quantity as the distribution quantities of respective item exhibitors. In an exemplary embodiment of the present disclosure, the stocking module is further configured to acquire personal purchasing power parameters, industry parameters and economic situation parameters of regions where individual item exhibitors are located when it is determined that the attribute information of the target item does not satisfy the preset rule; input the personal purchasing power parameters, industry parameters and economic situation parameters into a second transaction volume prediction model, and determine outputs of the second transaction volume prediction model as the predicted transaction volumes corresponding to respective item exhibitors; where the second transaction volume prediction model is obtained by training a machine learning model based on personal purchasing power parameter samples, industry parameter samples and economic situation parameter samples.

The specific details of each module in the above-mentioned apparatus for determining a stocking quantity have been described in detail in the corresponding method for determining a stocking quantity, and thus will not be repeated here.

It should be noted that although several modules or units of the device for action performance are mentioned in the above detailed description, this division is not mandatory. Indeed, according to the embodiments of the present disclosure, the features and functions of two or more modules or units described above may be embodied in one module or unit. Conversely, the features and functions of one module or unit described above may be further divided into a plurality of modules or units to be embodied.

Additionally, although the various steps of the methods of the present disclosure are depicted in the figures in a particular order, this does not require or imply that the steps must be performed in the particular order or that all illustrated steps must be performed to achieve the desired result. Additionally or alternatively, certain steps may be omitted, a plurality of steps may be combined into one step for execution, and/or one step may be decomposed into a plurality of steps for execution, etc.

From the description of the above embodiments, those skilled in the art can easily understand that the exemplary embodiments described herein may be implemented by software, or may be implemented by software combined with necessary hardware. Therefore, the technical solutions according to the embodiments of the present disclosure may be embodied in the form of software products, and the software products may be stored in a non-volatile storage medium (which may be CD-ROM, U disk, mobile hard disk, etc.) or on the network, including several instructions to cause a computing device (which may be a personal computer, a server, a mobile terminal, or a network device, etc.) to execute the method according to the embodiments of the present disclosure.

In an exemplary embodiment of the present disclosure, a computer storage medium capable of implementing the above method is also provided. A program product capable of implementing the method described above in this specification is stored thereon. In some possible embodiments, various aspects of the present disclosure may also be implemented in the form of a program product including program codes. When the program product is run on the terminal device, the program codes cause the terminal device to perform the steps according to various exemplary embodiments of the present disclosure described in the above-mentioned "exemplary method" section of this specification.

Referring to FIG. 7, a program product 700 for implementing the above method according to an embodiment of the present disclosure is described, which may adopt a portable compact disk read only memory (CD-ROM) and include program codes, and may run in the terminal device, for example, a personal computer. However, the program product of the present disclosure is not limited thereto, and in the present disclosure, a readable storage medium may be any tangible medium that contains or stores a program. The program may be used by or in conjunction with an instruction execution system, apparatus, or device.

The program product may employ any combination of one or more readable media. The readable medium may be a readable signal medium or a readable storage medium. The readable storage medium may be, for example, but not limited to, an electrical, magnetic, optical, electromagnetic, infrared, or semiconductor system, apparatus or device, or a combination of any of the above. More specific examples (non-exhaustive list) of the readable storage media include: electrical connections with one or more wires, portable disks, hard disks, random access memory (RAM), read only memory (ROM), erasable programmable read only memory (EPROM or flash memory), optical fiber, portable compact disk read only memory (CD-ROM), optical storage devices, magnetic storage devices, or any suitable combination of the foregoing.

The computer-readable signal medium may include a data signal in baseband or propagated as a part of a carrier, which carries readable program code. Such a propagated data signal may take many forms, including but not limited to electromagnetic signals, optical signals, or any suitable combination of the foregoing. The readable signal medium may also be any readable medium other than a readable storage medium, and the readable medium may send, propagate, or transmit a program for use by or in combination with an instruction execution system, apparatus, or device.

The program code contained on the readable medium may be transmitted using any appropriate medium, including but not limited to wireless, wired, optical cable, RF, etc., or any suitable combination of the foregoing.

The program code for performing the operations of the present disclosure may be written in any combination of one or more programming languages, which include object-oriented programming languages, such as Java, C++, etc. and further include conventional procedural programming languages, such as 'C' or similar programming languages. The program code may be executed entirely or partly on the user computing device, may be executed as an independent software package, may be executed partly on the user computing device and partly on the remote computing device, or may be executed entirely on the remote computing device or server. In the case of involving remote computing device, the remote computing device may be connected to the user computing device via any kind of network, including a local area network (LAN) or a wide area network (WAN), or it may be connected to an external computing device, for example, connected to an external computing device via the Internet by using an Internet service provider.

In addition, in an exemplary embodiment of the present disclosure, an electronic device capable of realizing the above method is also provided.

Those skilled in the art can understand that various aspects of the present disclosure can be implemented as systems, methods or program products. Therefore, various aspects of the present disclosure can be specifically implemented in the following forms: complete hardware implementation, complete software implementation (including firmware, microcode, etc.), or implementation combining hardware and software, which can be collectively referred to as "circuit", "module" or "system".

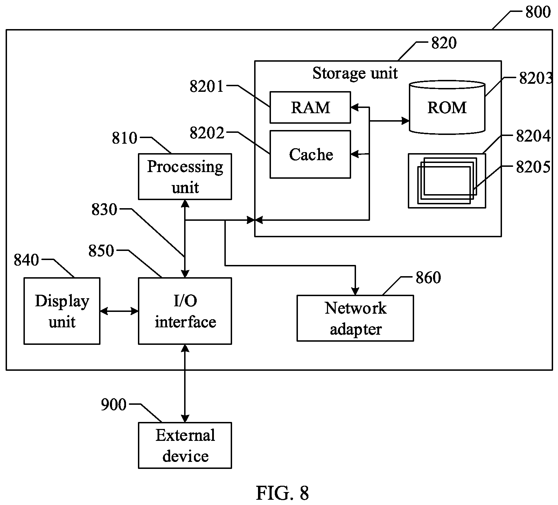

The electronic device 800 according to this implementation of the present disclosure will be described below with reference to FIG. 8. The electronic device 800 shown in FIG. 8 is only an example and should not impose any limitations on the functionality and scope of use of the embodiments of the present disclosure.

As shown in FIG. 8, the electronic device 800 is represented as a general-purpose computing device. The components of the electronic device 800 may include, but are not limited to, the above at least one processing unit 810, the above at least one storage unit 820, the bus 830 connecting different system components (including the storage unit 820 and the processing unit 810), and the display unit 840.

The storage unit stores the program code, which can be executed by the processing unit 810, so that the processing unit 810 performs the steps described in the "exemplary methods" section of this specification according to various exemplary embodiments of the present disclosure. For example, the processing unit 810 can perform the following steps as shown in FIG. 1: step S110, triggering a pre-created stock task at a specified time, and distributing the stock task to a task execution object; step S120, selecting a target item according to first interaction information input by the task execution object; step S130, determining a predicted transaction amount of the target item according to second interaction information input by the task execution object; the second interaction information including: a predicted transaction volume, transaction attribute data and a planned stocking quantity of the target item; step S140, when the predicted transaction amount is greater than a first rated value, stocking the target item according to the planned stocking quantity.

The storage unit 820 may include a readable medium in the form of a volatile storage unit, such as a random access storage unit (RAM) 8201 and/or a cache storage unit 8202, and may further include a read-only storage unit (ROM) 8203.

The storage unit 820 may also include a program/utility 8204 having a set (at least one) of program modules 8205, such program modules 8205 including but not limited to: an operating system, one or more applications, other program modules and program data, and each or some combination of these examples may include the implementation of a network environment.

The bus 830 may be one or more of several types of bus structures, including a storage unit bus or a storage unit controller, a peripheral bus, a graphics acceleration port, a processing unit, or a local bus using any of the various bus structures.

The electronic device 800 may also communicate with one or more external devices 900 (e.g., a keyboard, a pointing device, a Bluetooth device, etc.), and may also communicate with one or more device that enable the user to interact with the electronic device 800, and/or communicate with any device that enables the electronic device 800 to communicate with one or more other computing devices (e.g., a router, a modem, etc.). This communication may be performed through an input/output (I/O) interface 850. Moreover, the electronic device 800 may also communicate with one or more networks (e.g., a local area network (LAN), wide area network (WAN) and/or public networks, such as the Internet) through the network adapter 860. As shown in the figure, the network adapter 860 communicates with other modules of the electronic device 800 through the bus 830. It should be understood that although not shown in the accompanying drawings, other hardware and/or software modules may be used in conjunction with the electronic device 800, including but not limited to: a microcode, a device driver, a redundant processing unit, an external disk drive array, an RAID system, a tape driver, a data backup storage system, etc.

Through the description of the above implementation manners, those skilled in the art can easily understand that the exemplary implementation manners described here can be implemented by software, or can be implemented by combining software with necessary hardware. Therefore, the technical solutions according to the implementation manners of the present disclosure can be embodied in the form of a software product, and the software product can be stored in a non-volatile storage medium (which may be a CD-ROM, USB disk, mobile hard disk, etc.) or on the network, and includes several instructions to make a computing device (which may be a personal computer, a server, a terminal apparatus, or a network device, etc.) execute the method according to the implementation manners of the present disclosure.

In addition, the above drawings are only a schematic description of the processing included in the method according to the exemplary embodiments of the present disclosure, not a limiting purpose. It is easy to understand that the processes shown in the above drawings do not indicate or limit the time sequence of these processes. In addition, it is also easy to understand that these processes can be performed synchronously or asynchronously, for example, in a plurality of modules.

Other embodiments of the present disclosure will be easily thought of by those skilled in the art after considering the specification and practicing the present disclosure. The present disclosure is intended to cover any variations, uses or adaptations of the present disclosure, which follow the general principles of the present disclosure and include common knowledge or common technical means in the technical field that are not disclosed in the present disclosure. The specification and embodiments are to be regarded as exemplary only, with a true scope and spirit of the present disclosure being indicated by the appended claims.

## Claims

1. A method for determining a stocking quantity, comprising:

   triggering a pre-created stocking task at a specified time, and distributing the stocking task to a task execution object;
   selecting a target item according to first interaction information input by the task execution object;
   determining a predicted transaction amount of the target item according to second interaction information input by the task execution object; wherein the second interaction information comprises: a predicted transaction volume, transaction attribute data and a planned stocking quantity of the target item;
   when the predicted transaction amount is greater than a first rated value, stocking the target item according to the planned stocking quantity.

2. The method according to claim 1, wherein after determining the predicted transaction amount of the target item, the method further comprises:

   acquiring a month-on-month growth value and/or a year-on-year growth value of the predicted transaction amount;
   when the month-on-month growth value is greater than a second rated value and/or the year-on-year growth value is greater than a third rated value, stocking the target item according to the planned stocking quantity.

3. The method according to claim 1 or 2, wherein the first interaction information comprises item information;

the selecting the target item according to the first interaction information input by the task execution object comprises:

selecting the target item according to the item information input by the task execution object.

4. The method according to claim 1 or 2, wherein the first interaction information comprises an item screening condition;

the selecting the target item according to the first interaction information input by the task execution object comprises:

displaying recommended items that satisfy the item screening condition for the task execution object according to the item screening condition input by the task execution object;

in response to an item selection operation of the task execution object, selecting the target item from the recommended items.

5. The method according to claim 1, wherein after stocking the target item according to the planned stocking quantity, the method further comprises:

when determining that attribute information of the target item satisfies a preset rule, acquiring a historical transaction volume of each item exhibitor for the target item within a preset time period before a current time;

inputting the historical transaction volumes into a pre-trained first transaction volume prediction model, and determining outputs of the first transaction volume prediction model as the predicted transaction volumes corresponding to respective item exhibitors; wherein the first transaction volume prediction model is obtained by training a machine learning model according to historical transaction volume samples;

acquiring an accumulated value of the predicted transaction volumes corresponding to a plurality of item exhibitors;

when the accumulated value is less than or equal to the planned stocking quantity, determining the predicted transaction volumes corresponding to individual item exhibitors as distribution quantities of respective item exhibitors.

6. The method according to claim 5, wherein the method further comprises:

when the accumulated value is greater than the planned stocking quantity, acquiring ratios of the predicted transaction volumes corresponding to individual item exhibitors to the accumulated value, respectively;

determining products of the ratios and the planned stocking quantity as the distribution quantities of respective item exhibitors.

7. The method according to claim 5, wherein the method further comprises:

when determining that the attribute information of the target item does not satisfy the preset rule, acquiring personal purchasing power parameters, industry parameters and economic situation parameters of regions where individual item exhibitors are located;

inputting the personal purchasing power parameters, the industry parameters and the economic situation parameters into a second transaction volume prediction model, and determining outputs of the second transaction volume prediction model as the predicted transaction volumes corresponding to respective item exhibitors;

wherein the second transaction volume prediction model is obtained by training a machine learning model according to personal purchasing power parameter samples, industry parameter samples and economic situation parameter samples.

8. An apparatus for determining a stocking quantity, comprising:

a task distribution module, configured to trigger a pre-created stocking task at a specified time, and distribute the stocking task to a task execution object;

an item selection module, configured to select a target item according to first interaction information input by the task execution object;

a prediction module, configured to determine a predicted transaction amount of the target item according to second interaction information input by the task execution object; wherein the second interaction information comprises: a predicted transaction volume, transaction attribute data and a planned stocking quantity of the target item;

a stocking module, configured to stock the target item according to the planned stocking quantity when the predicted transaction amount is greater than a first rated value.

9. A computer storage medium on which a computer program is stored, wherein when the computer program is executed by a processor, the method for determining a stocking quantity according to any one of claims 1 to 7 is implemented.

**10.** An electronic device, comprising:

a processor; and
a memory for storing executable instructions of the processor;
wherein the processor is configured to execute the method for determining a stocking quantity according to any one of claims 1 to 7 by executing the executable instructions.

Trigger a pre-created stocking task at a specified time, and distribute the stocking task to a task execution object

S110

Select a target item according to first interaction information which is input by the task execution object

S120

Determine a predicted transaction amount of the target item according to second interaction information which is input by the task execution object

S130

When the predicted transaction amount is greater than a first rated value, stock the target item according to the planned stocking quantity

S140

FIG. 1

Acquire a month-on-month growth value and/or a year-on-year growth value of the predicted transaction amount

S201

When the month-on-month growth value is greater than a second rated value and/or the year-on-year growth value is greater than a third rated value, stock the target item according to the planned stocking quantity

S202

FIG. 2

| When it is determined that the attribute information of the target item satisfies a preset rule, acquire a historical transaction volume of each item exhibitor for the target item within a preset time period before a current time | S301 |

| Input the historical transaction volumes into a pre-trained first transaction volume prediction model, and determine outputs of the first transaction volume prediction model as the predicted transaction volumes corresponding to respective item exhibitors | S302 |

| Acquire an accumulated value of the predicted transaction volumes corresponding to a plurality of item exhibitors | S303 |

| When the accumulated value is less than or equal to the planned stocking quantity, determine the predicted transaction volumes corresponding to individual item exhibitors as the distribution quantities of respective item exhibitors | S304 |

| When the accumulated value is greater than the planned stocking quantity, acquire the ratio of the predicted transaction volume of each item exhibitor to the accumulated value; and determine products of the ratios and the planned stocking quantity as the distribution quantities of respective item exhibitors | S305 |

FIG. 3

Start — S401

Create and save a stocking rule — S402

Set a stocking task of the target item — S403

Submit to review — S404

The review is approved, and stocking is carried out — S405

Distribute goods (distribute goods on site, reserve to distribute goods upon arrival) — S406

End — S407

FIG. 4

| Warehouse management system | Stocking system | Allocation system | Supplier | WMS | Receiving system |
|---|---|---|---|---|---|
| Acquire item information | | | | | |
| Fill in information of person in charge | | | | | |
| Select the task cycle and effective time | | | | | |
| Select item SKU | | | | | |
| Select task execution object and reviewer | | | | | |
| Generate monthly/quarterly timing rule | | | | | |
| Send the rule to task execution object | | | | | |
| Receive task | | | | | |
| Select data and save it in the warehousing | | | | | |
| Capture purchase data, set planned stock quantity, cost data, and transaction attribute data | | | | | |
| Calculate predicted gross profit margin, predicted gross profit and predicted transaction amount | | | | | |
| Reach the month-on-month and year-on-year targets? | | | | | |
| Submit to review | Stock goods | Distribution plan (to be implemented) | Send out goods | Receive goods and increase inventory | |
| | | Execute distribution plan and split order | | Allocate goods distribution order | Allocate goods distribution order |

FIG. 5

600

Apparatus for determining a stocking quantity

Task distribution module  601

Item selection module  602

Prediction module  603

Stocking module  604

FIG. 6

700

Program

FIG. 7

FIG. 8

# INTERNATIONAL SEARCH REPORT

| International application No. |
| --- |
| **PCT/CN2021/118529** |

**A. CLASSIFICATION OF SUBJECT MATTER**

G06Q 10/08(2012.01)i

According to International Patent Classification (IPC) or to both national classification and IPC

**B. FIELDS SEARCHED**

Minimum documentation searched (classification system followed by classification symbols)

G06Q, G06Q

Documentation searched other than minimum documentation to the extent that such documents are included in the fields searched

Electronic data base consulted during the international search (name of data base and, where practicable, search terms used)

CNPAT, CNKI, EPODOC, WPI: 备货, 库存, 时间, 触发, 预测, 交易, 销售, stock+, time, trig+, predict, trade, sell,

**C. DOCUMENTS CONSIDERED TO BE RELEVANT**

| Category* | Citation of document, with indication, where appropriate, of the relevant passages | Relevant to claim No. |
| --- | --- | --- |
| A | CN 109345170 A (CHENGDU YICHUANG YOUBANG TECHNOLOGY CO., LTD.) 15 February 2019 (2019-02-15) description, paragraphs 32-58 | 1-10 |
| A | CN 110060016 A (SHENZHEN SPRINGWOODS HOLDING CO., LTD.) 26 July 2019 (2019-07-26) entire document | 1-10 |
| A | CN 110276568 A (ALIBABA GROUP HOLDING LIMITED) 24 September 2019 (2019-09-24) entire document | 1-10 |
| A | US 2006085246 A1 (LI, Sheng) 20 April 2006 (2006-04-20) entire document | 1-10 |

☐ Further documents are listed in the continuation of Box C.   ☑ See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| **02 December 2021** | **15 December 2021** |

| Name and mailing address of the ISA/CN | Authorized officer |
| --- | --- |
| **China National Intellectual Property Administration (ISA/ CN)** **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

INTERNATIONAL SEARCH REPORT
Information on patent family members

International application No.

**PCT/CN2021/118529**

| Patent document cited in search report | | | Publication date (day/month/year) | Patent family member(s) | Publication date (day/month/year) |
|---|---|---|---|---|---|
| CN | 109345170 | A | 15 February 2019 | None | |
| CN | 110060016 | A | 26 July 2019 | None | |
| CN | 110276568 | A | 24 September 2019 | None | |
| US | 2006085246 | A1 | 20 April 2006 | None | |

Form PCT/ISA/210 (patent family annex) (January 2015)

**REFERENCES CITED IN THE DESCRIPTION**

**Patent documents cited in the description**

- CN 202011062111